# FASCICULE DE BREVET EUROPEEN

(11) **EP 4 175 928 B1**
(45) Date de publication et mention de la délivrance du brevet: **24.07.2024**
(21) Numéro de dépôt: 21740167.8
(22) Date de dépôt: 23.06.2021
(51) Int. Cl.: C04B 37/00, B32B 18/00, F01D 9/04, F01D 5/14, C04B 35/80, C04B 35/573, C04B 35/565, F01D 5/28, B29B 11/16, F01D 5/18

(54) **PROCÉDÉ DE FABRICATION D'UNE AUBE DE DISTRIBUTEUR EN MATÉRIAU COMPOSITE À MATRICE CÉRAMIQUE**
VERFAHREN ZUR HERSTELLUNG EINER LEITSCHAUFEL AUS EINEM KERAMISCHEN MATRIXVERBUNDMATERIAL
METHOD FOR MANUFACTURING A GUIDE VANE FROM A CERAMIC MATRIX COMPOSITE MATERIAL

(30) Priorité: 03.07.2020 FR 2007063
(43) Date de publication de la demande: 10.05.2023
(73) Titulaire: Safran Ceramics, 33185 Le Haillan (FR)
(72) Inventeur: GIMAT, Matthieu Arnaud, 77550 MOISSY-CRAMAYEL (FR); MATEO, Julien, 77550 MOISSY-CRAMAYEL (FR); ROUSSILLE, Clément Marie Benoît, 77550 MOISSY-CRAMAYEL (FR)
(74) Mandataire: Cabinet Beau de Loménie
(86) Numéro de dépôt international: PCT/FR2021/051148
(87) Numéro de publication internationale: WO 2022/003276

(56) Documents cités:
- WO-A1-2010/116066
- WO-A1-2012/001279
- WO-A1-2013/079859
- WO-A1-2016/132042
- US-A1- 2020 109 858
- US-A1- 2020 131 919

## Description

### Domaine Technique

L'invention concerne les procédés de fabrication d'aubes de distributeurs de turbine en matériau composite à matrice céramique (« matériau CMC »). Ces aubes peuvent être destinées à être intégrées dans les distributeurs de turbomachines aéronautiques ou de turbomachines industrielles.

### Technique antérieure

Les distributeurs de turbine sont des pièces liées au carter d'un turboréacteur permettant de canaliser et d'orienter les gaz du flux primaire. Un étage de turbine est constitué d'un aubage fixe appelé « distributeur » (ou stator), suivi d'un aubage mobile ou rotor (ensemble du disque de turbine et des aubes mobiles). Les distributeurs de turbine sont réalisés avec des aubes à pales creuses, c'est-à-dire avec des pales présentant un passage longitudinal interne sur toute leur longueur entre leurs extrémités extérieure et intérieure. De tels passages permettent d'acheminer un flux d'air de l'extérieur vers l'intérieur, notamment pour le refroidissement de disques de roues mobiles de turbine.

Les matériaux CMC ont été proposés comme éléments de partie chaude de turbomachine. En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Le document US 2020/0109858 décrit un exemple d'aube en matériau composite à matrice céramique comprenant deux plateformes. Le document WO 2016/132042 décrit la fabrication d'une aube de turbomachine par l'insertion d'une préforme de tenon dans une unique préforme comprenant des portions destinées à former des plateformes.

Le distributeur est soumis à des efforts liés au flux aérodynamique dans la veine et à l'effet piston sur le carter sous le distributeur (différence de pression entre les cavités amont et aval sous le distributeur). Ces efforts créent un moment autour de la fixation entre le distributeur et le carter.

Les aubes de distributeur doivent faire cheminer les efforts par des zones assurant une tenue structurale suffisante tout en présentant une forme relativement complexe permettant d'assurer différentes fonctions, comme notamment l'orientation et la distribution du flux de gaz aux étages avals (profil aérodynamique de la pale), le guidage des flux par les veines supérieure et inférieure (plateformes) et l'alimentation du carter intérieur en en air de refroidissement.

Il serait souhaitable de disposer d'un procédé de fabrication simple d'une aube de distributeur en matériau CMC permettant d'assurer, de manière satisfaisante, la tenue aux efforts exercés ainsi que les fonctions souhaitées.

### Exposé de l'invention

L'invention concerne un procédé de fabrication d'une aube de distributeur de turbine en matériau composite à matrice céramique, le procédé comprenant :
- la fourniture d'une première préforme fibreuse comprenant (i) une partie centrale creuse destinée à former un renfort fibreux d'une pale de l'aube à obtenir, (ii) une partie latérale intérieure s'étendant depuis une portion intérieure de la partie centrale de chaque côté de celle-ci et transversalement à celle-ci, et (iii) une partie latérale extérieure s'étendant depuis une portion extérieure de la partie centrale de chaque côté de celle-ci et transversalement à celle-ci,
- la fourniture d'un couple de deuxièmes préformes fibreuses ayant chacune une ouverture ayant une forme de la pale de l'aube à obtenir qui débouche sur un premier bord de la deuxième préforme fibreuse considérée, chaque deuxième préforme fibreuse ayant deux peaux liées sur un deuxième bord de la deuxième préforme fibreuse considérée, distinct du premier bord, ces peaux définissant des zones non liées de part et d'autre de l'ouverture de sorte à pouvoir être écartées l'une par rapport à l'autre,
- l'assemblage d'une des deuxièmes préformes fibreuses avec la première préforme fibreuse par insertion de la partie centrale dans l'ouverture de la deuxième préforme fibreuse considérée et par positionnement de la partie latérale intérieure entre les peaux de la deuxième préforme fibreuse considérée, cet assemblage étant destiné à former un renfort fibreux d'une plateforme intérieure de l'aube à obtenir,
- l'assemblage de l'autre des deuxièmes préformes fibreuses avec la première préforme fibreuse par insertion de la partie centrale dans l'ouverture de la deuxième préforme fibreuse considérée et par positionnement de la partie latérale extérieure entre les peaux de la deuxième préforme fibreuse considérée, cet assemblage étant destiné à former un renfort fibreux d'une plateforme extérieure de l'aube à obtenir, et
- la solidarisation des deuxièmes préformes ainsi assemblées avec la première préforme par formation d'une matrice céramique commune entre ces préformes.

La fabrication séparée de la première préforme et des deuxièmes préformes, qui supportent chacune un nombre limité de fonctions, permet de simplifier la fabrication par rapport au cas où le renfort fibreux de l'aube est formé en une seule pièce. En outre, le fait d'intercaler les parties latérales entre les peaux des deuxièmes préformes fibreuses permet d'obtenir un ensemble ayant une bonne tenue aux efforts en fonctionnement.

Dans un exemple de réalisation, la première préforme fibreuse est obtenue par tissage tridimensionnel.

Dans un exemple de réalisation, les deuxièmes préformes sont tissées par tissage tridimensionnel, et les peaux sont tissées ensemble sur le deuxième bord, les deuxièmes préformes présentant une zone de déliaison définissant les zones non liées.

Dans un exemple de réalisation, la partie centrale de la première préforme est prolongée du côté extérieur de la partie latérale extérieure par une portion formant préforme de partie d'accrochage pour le montage de l'aube à obtenir dans un carter. Dans un exemple de réalisation, la partie centrale de la première préforme fibreuse est destinée à définir le profil aérodynamique de l'aube à obtenir. En variante, la première préforme fibreuse comprend en outre une texture fibreuse profilée rapportée sur la partie centrale et destinée à définir le profil aérodynamique de l'aube à obtenir.

Dans un exemple de réalisation, la matrice commune est formée au moins par infiltration chimique en phase vapeur (« Chemical Vapor Infiltration » ; « CVI »). En variante ou en combinaison, la matrice commune est formée au moins par voie liquide. On peut ainsi par exemple former une première phase de matrice commune par infiltration chimique en phase vapeur et ensuite une deuxième phase de matrice commune par voie liquide, par exemple par infiltration à l'état fondu.

### Brève description des dessins

[Fig. 1] La figure 1 est une vue en perspective d'une première préforme fibreuse mise en oeuvre dans le cadre d'un exemple de procédé selon l'invention.
[Fig. 2] La figure 2 représente une des deuxièmes préformes fibreuses qui est destinée à former la plateforme extérieure après assemblage avec la première préforme fibreuse dans le cadre de l'exemple de procédé selon l'invention.
[Fig. 3] La figure 3 représente une autre des deuxièmes préformes fibreuses qui est destinée à former la plateforme intérieure après assemblage avec la première préforme fibreuse dans le cadre de l'exemple de procédé selon l'invention.
[Fig. 4] La figure 4 est une vue en perspective de l'ensemble obtenu après assemblage des deuxièmes préformes fibreuses sur la première préforme fibreuse.

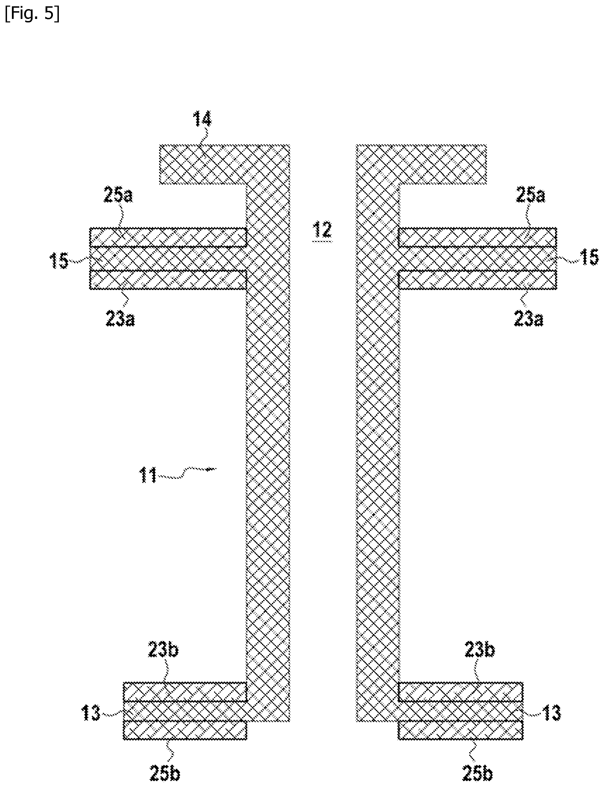

[Fig. 5] La figure 5 est une vue schématique en coupe longitudinale de l'ensemble illustré à la figure 4.
[Fig. 6] La figure 6 est une vue schématique en coupe longitudinale d'une autre variante de première préforme fibreuse comprenant une texture fibreuse profilée rapportée qui peut être mise en oeuvre dans le cadre d'une variante de procédé selon l'invention.
[Fig. 7] La figure 7 est une vue de dessus de la première préforme fibreuse illustrée à la figure 6.

### Description des modes de réalisation

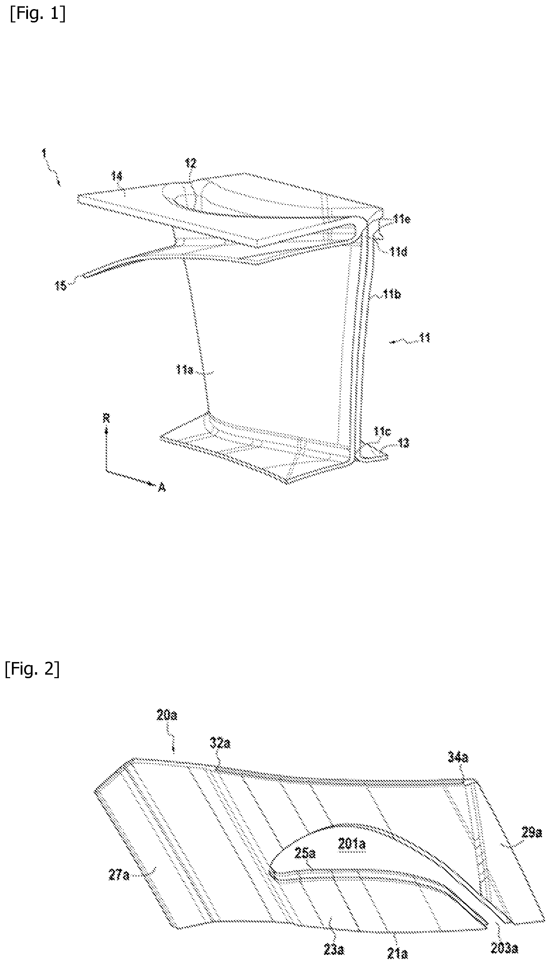

La figure 1 est une vue en perspective d'une première préforme fibreuse 1 utilisable dans le cadre d'un exemple de procédé selon l'invention.

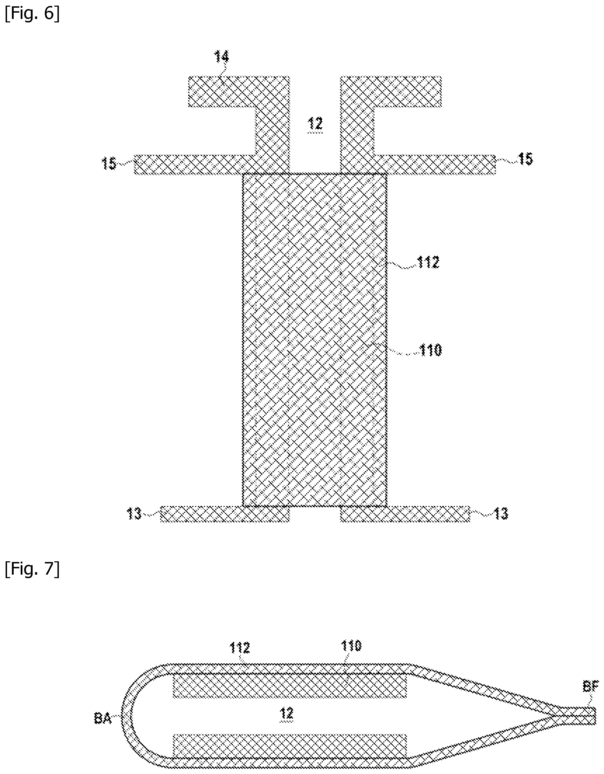

La première préforme fibreuse 1 comprend une partie centrale 11 destinée à former une partie structurale de la pale de l'aube à obtenir. Dans l'exemple considéré ici, la partie centrale 11 présente un profil aérodynamique, destiné à définir l'intrados et l'extrados de l'aube. Un premier côté 11a de la partie centrale 11 est destiné à définir l'extrados, et un deuxième côté 11b de la partie centrale 11 est destiné à définir l'intrados. On notera que la partie structurale ne forme pas nécessairement le profil aérodynamique de l'aube comme cela sera décrit plus bas en lien avec les figures 6 et 7.

La partie centrale 11 est une partie creuse qui présente un passage longitudinal 12 interne s'étendant entre sa portion intérieure 11c et sa portion extérieure 11d. Le passage longitudinal 12 est destiné à être traversé par le flux d'air de refroidissement. Le premier côté 11a et le deuxième côté 11b délimitent le passage longitudinal 12, le passage longitudinal 12 étant présent entre ces côtés 11a et 11b. Dans tout le texte, les termes « intérieur » et « extérieur » sont utilisés par rapport à la direction radiale (flèche R) par rapport à l'axe (flèche A) du distributeur, c'est-à-dire à la direction selon un rayon du distributeur (droite reliant le centre du distributeur à sa périphérie).

La première préforme fibreuse 1 comprend en outre une partie latérale intérieure 13 s'étendant depuis la portion intérieure 11c de chaque côté de celle-ci et transversalement à celle-ci. La première préforme fibreuse 1 comprend en outre une partie latérale extérieure 15 s'étendant depuis la portion extérieure 11d de chaque côté de celle-ci et transversalement à celle-ci.

Dans l'exemple illustré, la partie centrale 11 et les parties latérales intérieure 13 et extérieure 15 appartiennent à une même texture fibreuse obtenue par tissage tridimensionnel. On a ainsi, dans cet exemple, une continuité textile entre la partie centrale 11 et les parties latérales inférieure 13 et extérieure 15. La partie latérale intérieure 13 et la partie latérale extérieure 15 sont ici définies par pliage de la texture fibreuse. Dans l'exemple illustré, la texture fibreuse présente une zone de déliaison définie à partir d'un fond de déliaison 11e. Les fils de la partie latérale extérieure 15 ne sont pas liés avec la partie centrale 11 dans la zone de déliaison. En outre, la partie centrale 11 est, dans l'exemple illustré, prolongée du côté extérieur de la partie latérale extérieure 15 par une portion 14 formant préforme de partie d'accrochage pour le montage de l'aube dans un carter.

Une fabrication possible de la première préforme fibreuse peut d'abord comporter la réalisation d'une ébauche fibreuse sous la forme d'une bande tissée par tissage tridimensionnel. Les fils utilisés pour former l'ébauche peuvent être en céramique, notamment en carbure de silicium (SiC), ou en carbone.

Le tissage de l'ébauche est effectué avec une déliaison localisée au niveau du fond de déliaison 11e. De façon connue en soi, une déliaison est réalisée entre deux couches de fils de chaîne en omettant de faire passer un fil de trame à travers la zone de déliaison pour lier des fils de couches de chaîne situées de part et d'autre de la déliaison. Dans tout le texte, les rôles entre fils de chaîne et fils de trame sont interchangeables.

Après tissage de l'ébauche, des découpes peuvent être réalisées pour éliminer les portions excédentaires qui ne sont pas destinées à se retrouver dans la première préforme fibreuse. L'ébauche est ensuite positionnée dans un outillage de conformation pour la mettre en forme et obtenir ainsi la première préforme fibreuse 1. L'ébauche peut être pliée sur elle-même autour de la forme afin d'obtenir la partie centrale 11. L'ébauche peut ainsi être pliée au niveau de la portion intérieure 11c afin de former la partie latérale inférieure 13 et au niveau de la portion extérieure 11d afin de former la portion 14 formant préforme de partie d'accrochage. La partie latérale extérieure 15 peut être dépliée au niveau du fond de déliaison 11e.

Le cas illustré est relatif à une première préforme fibreuse formée par une unique texture obtenue par tissage tridimensionnel. L'invention n'est toutefois pas limitée à ce cas, la première préforme pouvant en variante être obtenue par drapage d'une pluralité de nappes fibreuses unidirectionnelles ou de strates de tissu bidimensionnel ou tridimensionnel.

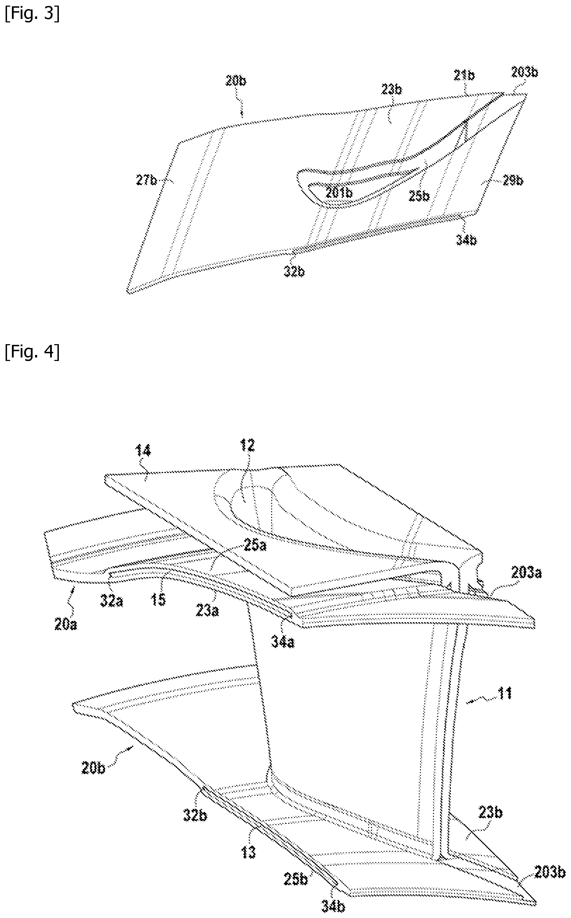

On vient de décrire la structure et la fabrication de la première préforme fibreuse 1. La suite aborde, en lien avec les figures 2 et 3, un exemple de structure possible pour les deuxièmes préformes fibreuses qui sont destinées à être assemblées avec la première préforme fibreuse afin d'obtenir le renfort fibreux des plateformes.

Les deuxièmes préformes fibreuses 20a/20b ont chacune une forme similaire, la description qui suit s'applique à chacune de ces deuxièmes préformes 20a/20b.

La deuxième préforme fibreuse 20a/20b peut être formée par une bande obtenue par tissage tridimensionnel. La deuxième préforme fibreuse 20a/20b présente une zone de déliaison qui s'étend entre deux fonds de déliaison 32a/32b et 34a/34b. Cette zone de déliaison définit deux peaux 23a/23b et 25a/25b qui peuvent être écartées l'une par rapport à l'autre. Les deux peaux 23a/23b et 25a/25b sont tissées entre elles sur des bords longitudinaux opposés 27a/27b et 29a/29b de la deuxième préforme considérée 20a/20b. La deuxième préforme fibreuse 20a/20b a une ouverture traversante 201a/201b qui a la forme de la pale de l'aube à obtenir, cette ouverture 201a/201b débouche sur un bord latéral 21a/21b de la deuxième préforme fibreuse considérée 20a/20b au niveau d'une entrée 203a/203b.

Pour réaliser l'assemblage des deuxièmes préformes fibreuses avec la première préforme fibreuse, la partie centrale 11 est insérée dans les ouvertures 201a/201b au travers des entrées 203a/203b et les peaux 25a/23a, ou 25b/23b, sont écartées afin d'insérer les parties latérales 15 et 13 entre celles-ci dans la zone de déliaison de chaque deuxième préforme fibreuse. La figure 4 illustre le renfort fibreux obtenu après assemblage. La partie latérale extérieure 15 est présente entre les peaux 23a et 25a, et la partie latérale intérieure 13 entre les peaux 23b et 25b. La partie centrale 11 est présente dans les ouvertures 201a/201b des deuxièmes préformes fibreuses. Le renfort fibreux illustré à la figure 4 définit à la fois le renfort fibreux de la pale et des plateformes.

On notera que lors de l'assemblage, la première et les deuxièmes préformes fibreuses peuvent ou non être consolidées. Une préforme consolidée a sa porosité partiellement remplie par une phase de matrice de consolidation lui permettant de conserver sa forme sans assistance d'un outillage de maintien. On peut assembler les première et deuxièmes préformes à des stades différents, par exemple la première préforme peut être consolidée et les deuxièmes préformes non consolidées lors de l'assemblage. En outre, les fils de la première et des deuxièmes préformes peuvent ou non avoir été revêtus par une interphase de défragilisation avant l'assemblage. Les techniques de formation d'une interphase de défragilisation ou de consolidation sont connues en soi.

Une fois l'assemblage réalisé, une matrice céramique commune aux première et deuxièmes préformes est ensuite formée.

Cette matrice commune peut être réalisée en tout ou partie par infiltration chimique en phase vapeur, ou en tout ou partie par voie liquide. La technique de voie liquide peut être une infiltration à l'état fondu (« Melt-Infiltration » ; « MI ») ou une technique d'imprégnation et de pyrolyse de polymère (« Polymer Imprégnation Pyrolysis » ; « PIP »). La formation de la matrice céramique par les techniques évoquées est connue en soi. On notera que l'on peut utiliser une combinaison de ces techniques pour former la matrice. La matrice commune peut comporter du carbure de silicium, par exemple. Il peut y avoir continuité de la matrice commune entre les deuxièmes préformes et la première préforme.

On obtient, après formation de la matrice, une aube fixe de distributeur de turbine d'une turbomachine, par exemple un turbomoteur aéronautique. L'aube est en matériau CMC et comprend une pale et des plateformes intérieure et extérieure. Du côté extérieur de la plateforme extérieure, la pale est prolongée par une partie d'accrochage pour le montage de l'aube dans un carter. La face extérieure de la plateforme intérieure et la face intérieure de la plateforme extérieure sont destinées à délimiter la veine d'écoulement de gaz dans le distributeur après montage de l'aube dans le distributeur. On peut obtenir le distributeur de turbine en montant un ensemble d'aubes telles que décrites ci-avant dans un carter de turbine.

Les figures 6 et 7 illustrent une variante de première préforme fibreuse. Les mêmes éléments sont référencés de la même manière que décrit plus haut. Dans cet exemple, la partie structurale 110 de l'aube n'a pas la forme du profil aérodynamique de l'aube à obtenir. Dans cet exemple, une texture profilée supplémentaire 112 ayant le profil aérodynamique de l'aube à obtenir a été rapportée sur la partie structurale. Cette texture profilée 112 définit en particulier le bord d'attaque BA et le bord de fuite BF de l'aube à obtenir.

## Revendications

1. Procédé de fabrication d'une aube de distributeur de turbine en matériau composite à matrice céramique, le procédé comprenant :
- la fourniture d'une première préforme fibreuse (1) comprenant (i) une partie centrale (11 ; 110) creuse destinée à former un renfort fibreux d'une pale de l'aube à obtenir, (ii) une partie latérale intérieure (13) s'étendant depuis une portion intérieure (11c) de la partie centrale de chaque côté de celle-ci et transversalement à celle-ci, et (iii) une partie latérale extérieure (15) s'étendant depuis une portion extérieure (11d) de la partie centrale de chaque côté de celle-ci et transversalement à celle-ci,
- la fourniture d'un couple de deuxièmes préformes fibreuses (20a ; 20b) ayant chacune une ouverture (201a ; 201b) ayant une forme de la pale de l'aube à obtenir qui débouche sur un premier bord (21a ; 21b) de la deuxième préforme fibreuse considérée, chaque deuxième préforme fibreuse ayant deux peaux (23a-25a ; 23b-25b) liées sur un deuxième bord (27a ; 27b) de la deuxième préforme fibreuse considérée, distinct du premier bord, ces peaux définissant des zones non liées de part et d'autre de l'ouverture de sorte à pouvoir être écartées l'une par rapport à l'autre,
- l'assemblage d'une des deuxièmes préformes fibreuses avec la première préforme fibreuse par insertion de la partie centrale dans l'ouverture de la deuxième préforme fibreuse considérée et par positionnement de la partie latérale intérieure entre les peaux de la deuxième préforme fibreuse considérée, cet assemblage étant destiné à former un renfort fibreux d'une plateforme intérieure de l'aube à obtenir,
- l'assemblage de l'autre des deuxièmes préformes fibreuses avec la première préforme fibreuse par insertion de la partie centrale dans l'ouverture de la deuxième préforme fibreuse considérée et par positionnement de la partie latérale extérieure entre les peaux de la deuxième préforme fibreuse considérée, cet assemblage étant destiné à former un renfort fibreux d'une plateforme extérieure de l'aube à obtenir, et
- la solidarisation des deuxièmes préformes ainsi assemblées avec la première préforme par formation d'une matrice céramique commune entre ces préformes.

2. Procédé selon la revendication 1, dans lequel la première préforme fibreuse (1) est obtenue par tissage tridimensionnel.

3. Procédé selon la revendication 1, dans lequel les deuxièmes préformes (20a ; 20b) sont tissées par tissage tridimensionnel, et dans lequel les peaux (23a-25a ; 23b-25b) sont tissées ensemble sur le deuxième bord (27a ; 27b), les deuxièmes préformes présentant une zone de déliaison définissant les zones non liées.

4. Procédé selon l'une quelconque des revendications 1 à 3, dans lequel la partie centrale (11 ; 110) de la première préforme (1) est prolongée du côté extérieur de la partie latérale extérieure (15) par une portion (14) formant préforme de partie d'accrochage pour le montage de l'aube à obtenir dans un carter.

5. Procédé selon l'une quelconque des revendications 1 à 4, dans lequel la partie centrale (11) de la première préforme fibreuse est destinée à définir le profil aérodynamique de l'aube à obtenir.

6. Procédé selon l'une quelconque des revendications 1 à 4, dans lequel la première préforme fibreuse comprend en outre une texture fibreuse profilée (112) rapportée sur la partie centrale (110) et destinée à définir le profil aérodynamique de l'aube à obtenir.

7. Procédé selon l'une quelconque des revendications 1 à 6, dans lequel la matrice commune est formée au moins par infiltration chimique en phase vapeur.

8. Procédé selon l'une quelconque des revendications 1 à 7, dans lequel la matrice commune est formée au moins par voie liquide.

## Patentansprüche

1. Verfahren zur Herstellung einer Verteilerschaufel einer Turbine aus Verbundmaterial mit keramischer Matrix, wobei das Verfahren umfasst:
- die Bereitstellung einer ersten Faservorform (1), umfassend (i) einen zentralen hohlen Abschnitt (11; 110), der dazu bestimmt ist, eine Faserverstärkung eines Blatts der Schaufel, die erhalten werden soll, zu bilden, (ii) einen seitlichen inneren Abschnitt (13), der sich von einer inneren Sektion (11c) des zentralen Abschnitts auf jeder Seite desselben und quer dazu erstreckt, und (iii) einen seitlichen äußeren Abschnitt (15), der sich von einer äußeren Sektion (11d) des zentralen Abschnitts auf jeder Seite derselben und quer dazu erstreckt,
- die Bereitstellung eines Paars von zweiten Faservorformen (20a; 20b), die jeweils eine Öffnung (201a; 201b) aufweisen, welche eine Form des Blatts der Schaufel, die erhalten werden soll, aufweisen, die auf einem ersten Rand (21a; 21b) der zweiten betrachteten Faservorform mündet, wobei jede zweite Faservorform zwei Häute (23a-25a; 23b-25b) aufweist, die auf einem zweiten Rand (27a; 27b) der zweiten betrachteten Faservorform, der sich von dem ersten Rand unterscheidet, verbunden sind, wobei diese Häute nicht verbundene Zonen auf beiden Seiten der Öffnung definieren, auf solche Weise, dass die eine in Bezug auf die andere beabstandet ist,
- den Zusammenbau einer der zweiten Faservorformen mit der ersten Faservorform durch Einsetzen des zentralen Abschnitts in die Öffnung der zweiten betrachteten Faservorform und durch Positionieren des seitlichen inneren Abschnitts zwischen den Häuten der zweiten betrachteten Faservorform, wobei dieser Zusammenbau dazu bestimmt ist, eine Faserverstärkung einer inneren Plattform der Schaufel, die erhalten werden soll, zu bilden,
- den Zusammenbau der anderen der zweiten Faservorformen mit der ersten Faservorform durch Einsetzen des zentralen Abschnitts in die Öffnung der zweiten betrachteten Faservorform und durch Positionieren des seitlichen äußeren Abschnitts zwischen den Häuten der zweiten betrachteten Faservorform, wobei dieser Zusammenbau dazu bestimmt ist, eine Faserverstärkung einer äußeren Plattform der Schaufel, die erhalten werden soll, zu bilden, und
- die Befestigung der so mit der ersten Vorform zusammengebauten zweiten Vorformen durch Bildung einer diesen Vorformen gemeinsamen keramischen Matrix.

2. Verfahren nach Anspruch 1, wobei die erste Faservorform (1) durch dreidimensionale Verwebung erhalten wird.

3. Verfahren nach Anspruch 1, wobei die zweiten Vorformen (20a; 20b) durch dreidimensionale Verwebung gewebt werden, und wobei die Häute (23a-25a; 23b-25b) gemeinsam über den zweiten Rand (27a; 27b) gewebt werden, wobei die zweiten Vorformen eine bindungslose Zone aufweisen, welche die nicht verbundenen Zonen definiert.

4. Verfahren nach einem der Ansprüche 1 bis 3, wobei der zentrale Abschnitt (11; 110) der ersten Vorform (1) auf der äußeren Seite des seitlichen äußeren Abschnitts (15) durch eine Sektion (14) verlängert wird, die eine Vorform eines Verankerungsabschnitts für die Montage der Schaufel, die erhalten werden soll, in einem Gehäuse bildet.

5. Verfahren nach einem der Ansprüche 1 bis 4, wobei der zentrale Abschnitt (11) der ersten Faservorform dazu bestimmt ist, das aerodynamische Profil der Schaufel, die erhalten werden soll, zu definieren.

6. Verfahren nach einem der Ansprüche 1 bis 4, wobei die erste Faservorform ferner eine profilierte Fasertextur (112) umfasst, die auf den zentralen Abschnitt (110) aufgebracht und dazu bestimmt ist, das aerodynamische Profil der Schaufel, die erhalten werden soll, zu definieren.

7. Verfahren nach einem der Ansprüche 1 bis 6, wobei die gemeinsame Matrix zumindest durch chemische Infiltration in der Dampfphase gebildet wird.

8. Verfahren nach einem der Ansprüche 1 bis 7, wobei die gemeinsame Matrix zumindest auf flüssigem Weg gebildet wird.

## Claims

1. A method for manufacturing a turbine nozzle vane made of ceramic matrix composite material, the method comprising:
- the provision of a first fibrous preform (1) comprising (i) a hollow central section (11; 110) intended to form a fibrous reinforcement of an airfoil of the vane to be obtained, (ii) an internal lateral section (13) extending from an internal portion (11c) of the central section on each side thereof and transversely thereto, and (iii) an external lateral section (15) extending from an external portion (11d) of the central section on each side thereof and transversely thereto,
- the provision of a pair of second fibrous preforms (20a; 20b) each having an opening (201a; 201b) with a shape of the airfoil of the vane to be obtained that opens out onto a first edge (21a; 21b) of the second fibrous preform considered, each second fibrous preform having two skins (23a-25a; 23b-25b) bonded on a second edge (27a; 27b) of the second fibrous preform considered, distinct from the first edge, these skins defining unbonded areas on either side of the opening as to be able to be spaced apart from each other,
- the assembly of one of the second fibrous preforms with the first fibrous preform by insertion of the central section into the opening of the second fibrous preform considered and by positioning of the internal lateral section between the skins of the second fibrous preform considered, this assembly being intended to form a fibrous reinforcement of an internal platform of the vane to be obtained,
- the assembly of the other of the second fibrous preforms with the first fibrous preform by insertion of the central section into the opening of the second fibrous preform considered and by positioning of the external lateral section between the skins of the second fibrous preform considered, this assembly being intended to form a fibrous reinforcement of an external platform of the vane to be obtained, and
- the securing of the second preforms thus assembled to the first preform by formation of a common ceramic matrix between these preforms.

2. The method according to claim 1, wherein the first fibrous preform (1) is obtained by three-dimensional weaving.

3. The method according to claim 1, wherein the second preforms (20a; 20b) are woven by three-dimensional weaving, and wherein the skins (23a-25a; 23b-25b) are woven together on the second edge (27a; 27b), the second preforms having a debonding area defining the unbonded areas.

4. The method according to any one of claims 1 to 3, wherein the central section (11; 110) of the first preform (1) is extended on the external side of the external lateral section (15) by a portion (14) forming an attachment section preform for the mounting of the vane to be obtained in a casing.

5. The method according to any one of claims 1 to 4, wherein the central section (11) of the first fibrous preform is intended to define the aerodynamic profile of the vane to be obtained.

6. The method according to any one of claims 1 to 4, wherein the first fibrous preform further comprises a profiled fibrous texture (112) added onto the central section (110) and intended to define the aerodynamic profile of the vane to be obtained.

7. The method according to any one of claims 1 to 6, wherein the common matrix is formed at least by chemical vapor infiltration.

8. The method according to any one of claims 1 to 7, wherein the common matrix is formed at least by liquid process.
